# FASCICULE DE BREVET EUROPEEN

(11) **EP 2 528 203 B1**
(45) Date de publication et mention de la délivrance du brevet: **01.01.2014**
(21) Numéro de dépôt: 12003790.8
(22) Date de dépôt: 14.05.2012
(51) Int. Cl.: H02K 7/18, B64D 15/12

(54) **Dispositif d'alimentation électrique d'au moins un équipement d'un rotor tournant d'un aéronef, et aéronef**
Vorrichtung zur Stromversorgung mindestens einer Rotorausrüstung eines Luftfahrzeugs, und Luftfahrzeug
Device for supplying electric power to at least one device of a rotating rotor of an aircraft and aircraft

(30) Priorité: 24.05.2011 FR 1101599
(43) Date de publication de la demande: 28.11.2012
(73) Titulaire: EUROCOPTER, 13725 Marignane Cédex (FR)
(72) Inventeur: Bourget, Vincent, 84450 Jonquerettes (FR); Giordano, Serge, 13012 Marseille (FR); Imbert, Nicolas, 13008 Marseille (FR); Chuc, Charles, 13012 Marseille (FR)
(74) Mandataire: GPI & Associés

(56) Documents cités:
- EP-A1- 2 218 643
- EP-A2- 1 267 474
- DE-U1- 20 306 735
- GB-A- 545 305
- US-A- 3 002 718

## Description

La présente invention concerne un dispositif d'alimentation électrique d'au moins un équipement d'un rotor tournant.

L'invention se situe dans le domaine technique des moyens d'alimentation électrique d'un organe rotatif, et plus particulièrement des organes de dégivrage/antigivrage d'un rotor de giravion.

En effet, certains aéronefs sont munis de dispositifs de dégivrage/antigivrage de surfaces aérodynamiques, et notamment des pales d'un rotor. Le problème du givrage de telles surfaces aérodynamiques est bien connu dans l'industrie aéronautique, le profil aérodynamique de ces surfaces pouvant être défavorablement modifié en raison de la formation de glace en vol suite à l'impact de gouttelettes d'eau en surfusion contenues dans l'atmosphère.

Ce problème est souvent traité en équipant la surface aérodynamique d'une structure chauffante.

Par contre, on comprend qu'il peut être délicat d'alimenter en électricité un équipement présent sur un ensemble tournant à partir d'un générateur électrique présent en repère fixe au sein de la cellule d'un aéronef.

On connaît une pluralité de dispositifs pour acheminer un courant électrique vers un ensemble tournant monté à demeure de manière irréversible sur des hélices, des hélices propulsives ou d'éoliennes notamment.

Le document FR 2 553 596 décrit une hélice incluant des moyens générateurs d'énergie électrique au sein de son moyeu pour alimenter un système électrique de modification du pas des pales de l'hélice et un moyen de dégivrage.

Le document EP 0 629 318 décrit l'utilisation d'un aimant libre en rotation entre deux ensembles de bobines agencés au sein d'une hélice.

Le document EP 0 777 602 comprend un générateur ayant des bobines portées par un rotor, les bobines coopérant avec un aimant permanent fixe.

Le document EP 2 218 643 présente une machine électrique disposée dans une hélice pour alimenter électriquement des résistances. L'alternateur comprend un stator solidarisé à un carter fixe de l'hélice et des bobines solidarisées à un mât tournant de l'hélice.

Le document US 2011/0024567 décrit un appareil agencé dans un turbopropulseur à double hélice contrarotatives pour générer de l'électricité.

Il en va de même pour le document GB 584 563.

Le document WO 2010/015359 décrit des générateurs électriques agencés sur une hélice d'éolienne pour alimenter en électricité des moyens de modification du pas des pales de l'hélice, chaque générateur ayant une partie tournante coopérant avec une couronne crantée de la nacelle de l'hélice.

On constate que certains des précédents documents sont notamment relatifs aux avions qui sont susceptibles de voler dans des nuages chargés de gouttelettes d'eau en surfusion et d'être confrontés au givre en permanence. Dès lors, il peut effectivement être utile d'agencer un dispositif d'alimentation à demeure dans l'hélice d'un tel avion à des fins de dégivrage ou d'antigivrage.

De la même manière, un dispositif permettant d'alimenter un moyen électrique de modification du pas d'une hélice peut être présent en permanence sur cette hélice.

Par contre, certains aéronefs et notamment les giravions ne nécessitent pas l'implémentation permanente d'un tel dispositif d'alimentation électrique.

Par suite, on connaît un dispositif muni d'un générateur de courant alternatif relié à une unité électrique dénommée parfois « power deicing unit » en langue anglaise. L'unité électrique est notamment pourvue d'un redresseur électrique et d'un séquenceur pour alimenter une pluralité de câbles électriques selon une séquence prédéterminée. De plus, par mesure de sécurité, cette unité électrique est doublée.

Le générateur et l'unité électrique sont installés dans un repère fixe à savoir dans la cellule d'un giravion.

Par suite, le dispositif comprend un collecteur électrique comportant une partie non tournante et une partie tournante reliées par un système de balais frottant sur des bagues. La partie non tournante possède par exemple des bagues électriques circulaires alimentées électriquement par des câbles électriques provenant de l'unité électrique, la partie tournante ayant un balai circulant sur ces bagues

La partie non tournante alimente alors une pluralité de tapis chauffants par pale d'un rotor selon la séquence programmée dans l'unité électrique pour dégivrer les pales ou empêcher la formation de givre sur ces pales, chaque tapis étant relié par un câble électrique à un balai de la partie tournante du collecteur électrique.

Le collecteur électrique peut être agencé de manière réversible pour être utilisé uniquement durant des périodes hivernales ou pour des missions particulières.

Toutefois, le collecteur électrique est très lourd et difficile à mettre en place, notamment du fait de la présence d'un nombre important de câbles électriques de grandes dimensions et de bagues électriques.

En outre, les frottements de chaque balai du collecteur contre la bague électrique correspondante tendent à dégrader les performances de ce collecteur électrique. Des actions de maintenance nécessitant le démontage du dispositif doivent alors être entreprises relativement souvent. Or, le collecteur électrique étant parfois difficile d'accès, le coût de la maintenance peut être élevé et impose un temps d'immobilisation important du giravion.

Enfin, on note que l'unité électrique étant installée dans la cellule de l'aéronef, cette unité électrique est susceptible de perturber les équipements électriques environnants. De plus, l'unité électrique présente un encombrement non négligeable et de fait pénalisant.

On connaît aussi les documents US 3 002 718, GB 545 305, EP 1 267 474, et DE 203 06 735.

La présente invention a alors pour objet de proposer un dispositif d'alimentation électrique amovible visant à s'affranchir des limitations associées à un collecteur électrique du type décrit précédemment, voire à l'utilisation d'unité électrique dans les zones usuellement équipées d'une telle unité électrique.

Selon l'invention, un dispositif d'alimentation électrique, d'au moins un équipement d'un rotor tournant entraîné par un mât, comprend une canne amovible apte à être solidarisée de manière réversible au mât. Notamment, le dispositif d'alimentation électrique vise à alimenter un équipement d'un rotor tournant d'un aéronef.

Ce dispositif est notamment remarquable en ce que la canne comprend un alternateur supérieur et un tube supérieur apte à être solidarisé en rotation au mât de manière réversible, l'alternateur supérieur ayant une pluralité de bobines supérieures fixées à une surface périphérique interne supérieure du tube supérieur. Dès lors, la canne possède un arbre portant au moins un aimant permanent supérieur de l'alternateur supérieur séparé des bobines supérieures par un entrefer supérieur prédéterminé, au moins un moyen de roulement supérieur étant interposé entre l'arbre et le tube supérieur pour guider l'arbre. Ce dispositif inclut un mécanisme afin que l'arbre et le tube supérieur effectuent des mouvements rotatifs distincts, le mécanisme ayant un moyen de liaison pour pouvoir être connecté à un organe de référence d'un aéronef.

Il est à noter que l'on,entend par << alternateur >> une machine électrique comprenant au moins un ensemble mis en rotation pour générer un courant électrique.

Ainsi, selon l'invention, on utilise un dispositif amovible que l'on insère dans le mât d'un rotor, le tube supérieur étant fixé à ce mât.

Le mécanisme permet à l'arbre et au tube supérieur d'effectuer des mouvements rotatifs distincts, à savoir des mouvements selon des sens différents et/ou à des vitesses différentes afin de permettre à l'alternateur de générer un courant électrique.

Ce dispositif représente donc une alternative efficace aux collecteurs électriques à balais.

En outre, le caractère amovible du dispositif rend son application particulièrement intéressante notamment dans le domaine technique restreint des giravions. Il est aussi aisé de procéder à des actions de maintenance de ce dispositif, en le démontant du rotor tournant.

Il est à noter qu'un alternateur possède généralement un encombrement important. Toutefois, contrairement aux préjugés existants, il est possible d'agencer le dispositif au moins partiellement à l'intérieur d'un mât d'aéronef pour alimenter électriquement un équipement d'un rotor tournant.

De manière encore plus surprenante, la présence du mécanisme permet la génération d'un courant électrique relativement important au sein d'un mât tournant à faible vitesse, tel que le mât d'un rotor de sustentation d'un giravion.

Ce dispositif peut de plus comporter une ou plusieurs des caractéristiques qui suivent.

Par exemple, la canne ayant une collerette saillante de fixation pour solidariser temporairement le tube supérieur au mât, le dispositif comprend éventuellement une roue en matière souple du groupe des élastomères fixée à cette collerette, cette roue étant pourvue de crans périphériques aptes à coopérer par interférence de forme avec un organe tournant d'un rotor tournant.

La roue a notamment pour fonction d'éviter un blocage du mât en cas de blocage de l'alternateur supérieur.

Par ailleurs, le rotor tournant recevant le dispositif de manière réversible pouvant avoir une pluralité de zones électriques distinctes, l'alternateur supérieur peut comprendre une bobine supérieure par zone électrique.

Les bobines supérieures forment un bobinage supérieur qui peut en effet être polyphasé, chaque phase correspondant à une zone électrique à savoir par exemple à une pale donnée ou à certains tapis chauffant du rotor tournant. On obtient alors une architecture électrique simple induisant éventuellement un gain de masse, de coût et/ou d'encombrement par rapport à un système mettant en oeuvre des collecteurs électriques à balais.

On note que l'amplitude de la tension délivrée peut être adaptée par le bobinage supérieur pour correspondre aux besoins des appareils électriques à alimenter électriquement, tels que des tapis chauffants pour simplifier le dimensionnement et le coût de ces équipements.

Par ailleurs, en ségrégant fortement les différentes bobines supérieures, on minimise le risque d'apparition d'un court-circuit apte à générer un fort couple de freinage.

Selon un autre aspect, chaque bobine supérieure est éventuellement redondée par sécurité.

En outre, le couple induit des bobines supérieures peut être égal au couple nominal de fonctionnement de l'alternateur supérieur. En cas de défaillance de l'alternateur supérieur, le couple induit par cet alternateur supérieur n'a alors pas d'influence imprévue sur le fonctionnement du rotor tournant.

Pour éviter que l'alternateur supérieur induise un couple de freinage important du rotor tournant en cas de défaillance, il est alors possible de mettre en oeuvre une roue en matière souple, des bobines supérieures fortement ségrégées, un alternateur supérieur générant un couple induit suite au court circuit des bobines supérieures dénommé couple de court-circuit et égal au couple nominal de fonctionnement de cet alternateur supérieur. De même, il est possible de prévoir des organes fusibles de type électrique tels qu'un fil électrique d'une bobine supérieure ayant localement un diamètre réduit, ou encore un organe fusible mécanique du tube supérieur par exemple.

Selon un premier mode de réalisation, le mécanisme est muni d'un moyen de liaison, comportant un raccord autobloquant à un organe de référence immobile, un organe fixé au fond d'une boîte de transmission de puissance entraînant le mât du rotor tournant par exemple.

Le mécanisme peut immobiliser l'arbre du dispositif, le tube supérieur étant au contraire entraîné en rotation par le mât du rotor tournant.

Selon un deuxième mode de réalisation, le mécanisme est muni d'un moyen de liaison pourvu d'un raccord d'entraînement apte à être entraîné par un organe de référence rotatif.

Le mécanisme met en relation l'arbre du dispositif avec un organe de référence rotatif, tel qu'un pignon d'un étage épicycloïdal d'une boîte de transmission de puissance par exemple.

Dès lors, cet arbre effectue un mouvement rotatif selon un premier sens à une première vitesse en étant entraîné par le moyen de liaison, le tube supérieur effectuant un mouvement rotatif selon un deuxième sens à une deuxième vitesse en étant entraîné par le mât, le deuxième sens étant éventuellement confondu avec le premier sens.

Selon un troisième mode de réalisation, le mécanisme comprend une transmission mécanique munie d'une pluralité d'engrenages satellites en prise d'une part avec une couronne dentée et d'autre part avec un engrenage planétaire de l'arbre, les engrenages satellites étant portés par un porte-satellites pourvu d'un organe autobloquant de liaison coopérant avec un organe d'accueil immobile.

La transmission mécanique peut alors être un train d'engrenages épicycloïdal muni d'un ou plusieurs étages de satellites, afin de réduire ou d'augmenter la vitesse de rotation de l'arbre par rapport à la vitesse de rotation de la couronne.

Selon une variante de ce troisième mode de réalisation, la couronne dentée peut être solidaire de la surface périphérique interne supérieure du tube supérieur. De plus, l'organe autobloquant peut être un raccord autobloquant du moyen de liaison, visant à connecter le mécanisme à un organe de référence immobile d'un aéronef.

Selon une autre variante, la couronne dentée peut être entraînée par un moyen de liaison pourvu d'un raccord d'entraînement apte à être entraîné par un organe de référence rotatif. Par exemple, l'organe de référence rotatif est mis en mouvement par une boîte de transmission de puissance.

On comprend qu'il est possible de combiner ces modes de réalisation.

Selon un autre aspect, le dispositif comporte un alternateur inférieur pourvu d'un tube inférieur muni d'un organe de liaison non rotatif, cet alternateur inférieur ayant une pluralité de bobines inférieures fixées à une surface périphérique interne inférieure du tube inférieur, l'arbre portant au moins un aimant permanent inférieur de l'alternateur inférieur séparé des bobines inférieures par un entrefer inférieur prédéterminé, au moins un moyen de roulement inférieur étant interposé entre l'arbre et le tube inférieur. On note que l'aimant permanent inférieur et l'aimant permanent supérieur peuvent constituer un seul et même aimant. Les bobines inférieures constituent conjointement un bobinage inférieur.

Par conséquent, l'alternateur supérieur permet d'alimenter électriquement des équipements d'un rotor tournant, l'alternateur inférieur permettant d'alimenter électriquement des équipements présents dans la cellule de l'aéronef.

De plus, cet alternateur inférieur peut être utilisé pour freiner l'arbre du dispositif.

En outre, en permanence et/ou dans certaines phases de fonctionnement de l'aéronef, les bobines inférieures du bobinage inférieur en partie fixe peuvent-être alimentées électriquement par une installation électronique de puissance et de pilotage à partir d'une source d'énergie stockée dans la cellule de l'aéronef. De ce fait, l'alternateur est alors utilisé en mode moteur et non plus en mode générateur pour fournir de la puissance mécanique à la partie tournante.

Eventuellement, l'organe de liaison inclut un moyen d'accouplement permettant un désalignement entre une première portion et une deuxième portion de l'organe de liaison pour éviter un blocage du dispositif en cas de flexion du mat du rotor tournant.

Par ailleurs, le tube inférieur peut comprendre un porte-satellites portant une pluralité d'engrenages satellites en prise avec un engrenage planétaire de l'arbre et une couronne dentée.

Outre un dispositif d'alimentation électrique, l'invention vise un aéronef muni d'un rotor tournant comportant un tel dispositif amovible. Le dispositif d'alimentation électrique peut alors être fixé de manière réversible à un mât d'un rotor tournant de ce rotor tournant de manière à s'étendre à l'intérieur de ce mât.

L'invention et ses avantages apparaîtront avec plus de détails dans le cadre de la description qui suit avec des exemples de réalisation donnés à titre illustratif en référence aux figures annexées qui représentent :
- la figure 1, un schéma représentant un aéronef muni d'un dispositif d'alimentation électrique selon l'invention,
- la figure 2, ledit dispositif selon un premier mode de réalisation,
- la figure 3, un schéma présentant une roue souple agencée entre le tube supérieur du dispositif et un mât d'un rotor,
- la figure 4, ledit dispositif selon un deuxième mode de réalisation muni d'un alternateur supérieur,
- la figure 5, ledit dispositif selon un deuxième mode de réalisation muni d'un alternateur supérieur et d'un alternateur inférieur,
- la figure 6, ledit dispositif selon une première variante d'un troisième mode de réalisation muni d'un alternateur supérieur,
- la figure 7, ledit dispositif selon une première variante d'un troisième mode de réalisation muni d'un alternateur supérieur et d'un alternateur inférieur,
- la figure 8, ledit dispositif selon une deuxième variante d'un troisième mode de réalisation muni d'un alternateur supérieur,
- la figure 9, ledit dispositif selon une deuxième variante d'un troisième mode de réalisation muni d'un alternateur supérieur et d'un alternateur inférieur.

Les éléments présents dans plusieurs figures distinctes sont affectés d'une seule et même référence.

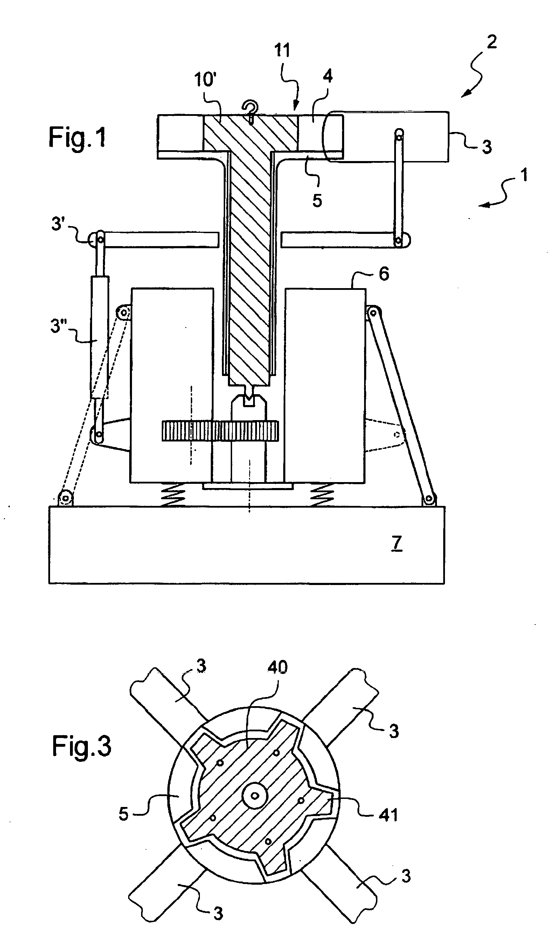

La figure 1 présente un aéronef 1 muni d'une cellule 7 portant une boîte de transmission de puissance 6 entraînant un mât 5.

Ce mât 5 est solidaire en rotation d'un moyeu 4 muni d'une pluralité de pales 3, le pas des pales 3 pouvant être modifié par des servocommandes 3" à l'aide d'un ensemble de deux plateaux de commande 3' dénommé parfois « plateaux cycliques » et représenté de manière schématique.

Par ailleurs, le rotor tournant peut comporter des équipements électriques. Dès lors, l'aéronef 1 inclut un dispositif 10 d'alimentation électrique amovible, ce dispositif 10 d'alimentation électrique comprenant une canne 11 pouvant être insérée au moins partiellement à l'intérieur du mât 5 pour générer un courant électrique et le transmettre auxdits équipements.

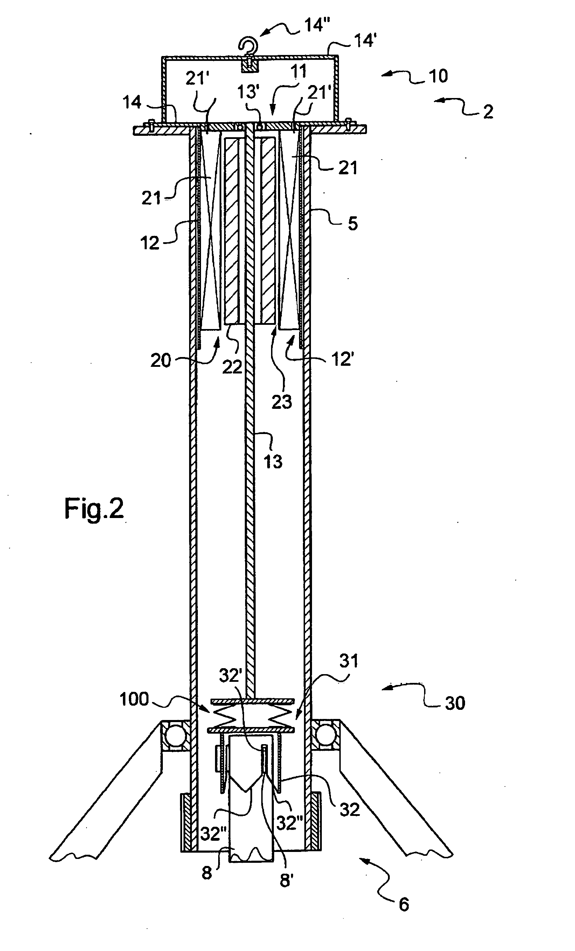

La figure 2 présente le dispositif 10 d'alimentation électrique selon un premier mode de réalisation.

Indépendamment du mode de réalisation, la canne 11 comprend un tube supérieur 12 pouvant être fixé au mât 5, par l'intermédiaire d'une collerette 14 saillante vissée à un épaulement du mât 5 par exemple. De plus, la collerette 14 peut coopérer avec un moyen de levage 14' muni d'un crochet de levage 14".

Pour installer le dispositif 10 sur un rotor tournant, il suffit de glisser le tube supérieur 12 de la canne 11 à l'intérieur du mât 5, puis de visser la collerette 14 à l'épaulement du mât 5 afin de solidariser le tube supérieur 12 au mât 5. On peut utiliser le crochet de levage pour manoeuvrer la canne 11.

Cette opération est réversible, le dispositif 10 pouvant être enlevé lorsque le rotor n'est plus muni d'équipements électriques à alimenter électriquement ou pour des actions de maintenance par exemple.

Afin d'alimenter électriquement de tels équipements, le dispositif 10 comprend un alternateur supérieur 20 logé dans le tube supérieur 12 pour fournir une énergie électrique aux équipements du rotor tournant, via des liaisons filaires 21'.

Cet alternateur supérieur 20 comprend une pluralité de bobines supérieures 21 formant un bobinage supérieur. Chaque bobine supérieure 21 est fixée à l'intérieur du tube supérieur 12, à savoir à une surface périphérique interne supérieure 12' de ce tube supérieur 12.

De plus, l'alternateur supérieur 20 inclut au moins un aimant permanent supérieur 22 agencé sur un arbre 13 de la canne 11, un entrefer supérieur 23 prédéterminé séparant l'aimant permanent supérieur 22 des bobines supérieures 21.

Dès lors, l'arbre 13, le tube supérieur 12 et le mât 5 sont concentriques et s'étendent axialement le long de l'axe de rotation du rotor tournant. En outre, au moins un moyen de guidage supérieur pourvu d'un moyen de roulement supérieur 13' à billes ou à rouleaux est interposé entre le tube supérieur 12 et l'arbre 13.

D'autres moyens de roulement peuvent être implémentés pour maintenir en position l'arbre 13 notamment.

Par ailleurs, afin que l'alternateur génère de l'électricité, le dispositif 10 comprend un mécanisme 30 mécanique pour que l'alternateur supérieur fournisse la puissance électrique requise par le constructeur à des équipements donnés. Ce mécanisme induit alors des mouvements rotatifs distincts de l'arbre 13 et du tube supérieur 12, et donc de l'aimant permanent supérieur 22 et des bobines supérieures 21, permettant la génération d'un courant électrique transmis par les bobines supérieures 21 aux équipements du rotor tournant via des liaisons filaires 21'.

On constate alors que le dispositif peut être agencé dans le mât 5 d'un aéronef, et permettre la génération d'un courant électrique même si le mât effectue une rotation à une vitesse relativement faible. L'invention est alors notamment applicable à un hélicoptère.

Ce mécanisme 30 comprend un moyen de liaison 31 rapide à un organe de référence de l'aéronef.

En fonction de la réalisation, le mécanisme peut comprendre un moyen de liaison à un organe de référence fixe pour immobiliser l'arbre 13, et/ou un moyen de liaison à un organe de référence rotatif de l'aéronef afin que l'arbre 13 et le tube supérieur 12 soient entraînés en rotation autour de l'axe de rotation du rotor tournant à des vitesses distinctes et/ou selon des sens de rotation distincts.

En référence à la figure 3, le dispositif 10 peut inclure un moyen fusible supérieur comprenant une roue 40 interposée entre la collerette 14 de la canne 11 et le mât 5, pour éviter qu'un blocage accidentel de l'alternateur supérieur 20 bloque le rotor tournant. Cette roue 40 est alors fixée à la collerette et coopère par interférence de forme avec un organe tournant du rotor tournant.

Par exemple, la roue 40 comprend une pluralité de crans 41 logés dans des espaces creux du mât 5, la roue 40 étant réalisée à partir d'un matériau souple à choisir dans le groupe des élastomères.

En fonctionnement normal, le mât 5 entraîne en rotation le tube supérieur 12 au travers de la roue 40. Par contre, si l'alternateur supérieur 20 se bloque, la souplesse de la roue permet aux crans 41 de se déformer de manière à ne pas bloquer la rotation du rotor.

La roue 40 est donc un moyen de débrayage mécanique en cas de blocage éventuel du dispositif 10. De plus, on comprend que la roue 40 peut permettre de rattraper des jeux de fabrication, voire de compenser une déformation éventuelle du mât selon certaines phases de vol.

En référence à la figure 1, de manière alternative, les moyens de fixation de la collerette 14 au mât 5 peuvent comprendre une section fusible, ces moyens de fixation pouvant inclure des goupilles ou équivalent par exemple.

De plus, il est concevable d'utiliser des bobines supérieures générant lors d'un court-circuit un couple induit égal au couple nominal de fonctionnement de l'alternateur supérieur 20. Si une défaillance de type court circuit se produit, l'alternateur supérieur génère un couple induit égal au couple nominal de fonctionnement, et ne perturbe donc pas le mouvement rotatif du rotor tournant.

Selon un autre aspect, les fils électriques des bobines supérieures peuvent aussi comprendre par sécurité une zone avec une section réduite réalisant une fonction fusible en cas de court-circuit, ces bobines supérieures étant par ailleurs favorablement redondées.

En outre, le rotor tournant peut comporter une pluralité de zones électriques distinctes, chaque pale ou chaque tapis chauffant représentant une zone électrique par exemple. Le tube supérieur 12 peut alors comprendre une bobine supérieure 21, éventuellement redondée, par zone électrique.

On peut de plus fabriquer le bobinage supérieur en prenant soin de ségréger les bobines supérieures 21 afin de réduire les risques de court-circuit.

Par ailleurs, selon le premier mode de réalisation représenté sur la figure 2, le mécanisme 30 est muni d'un moyen de liaison 31 pour immobiliser l'arbre 13. L'aimant permanent supérieur 22 et les bobines supérieures 21 sont donc animés de mouvements rotatifs distincts, l'arbre 13 ayant une vitesse de rotation nulle et le tube supérieur 12 ayant une vitesse de rotation égale à la vitesse de rotation du mât 5.

Ce moyen de liaison 31 comporte un raccord autobloquant 32 de type crabot pouvant être agencé sur un organe de référence immobile 8, tel qu'un pion de fixation solidaire du fond de la boîte de transmission de puissance 6 par exemple. Le raccord autobloquant 32 peut comprendre des lumières 32' débouchant sur des plans inclinés 32" qui coopèrent avec des saillies 8' de l'organe de référence immobile 8.

On note que le moyen de liaison 31 peut aussi comprendre un moyen d'accouplement 100 agencé entre l'arbre 13 portant l'aimant permanent supérieur 22 et le raccord autobloquant 32 pour autoriser un désalignement entre cet aimant permanent supérieur 22 et ce raccord autobloquant 32.

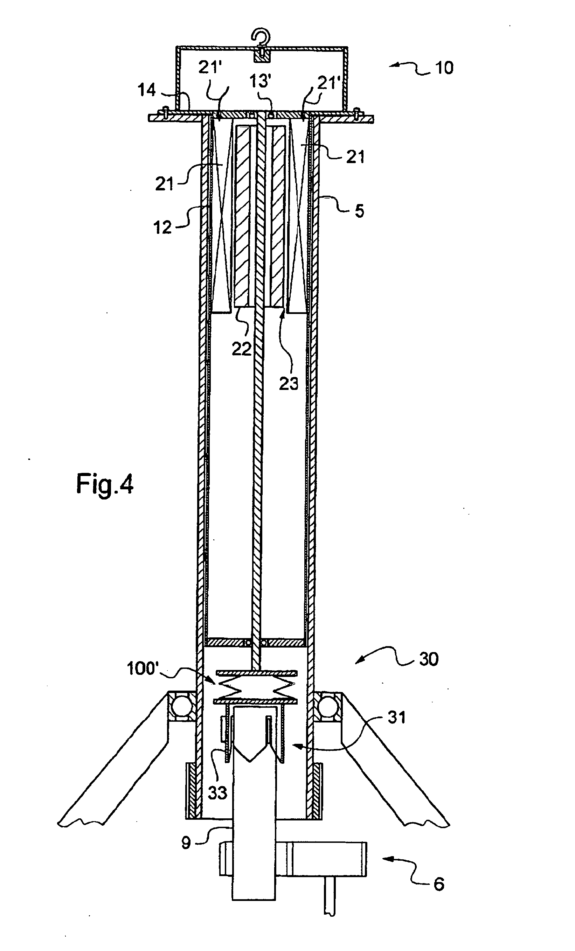

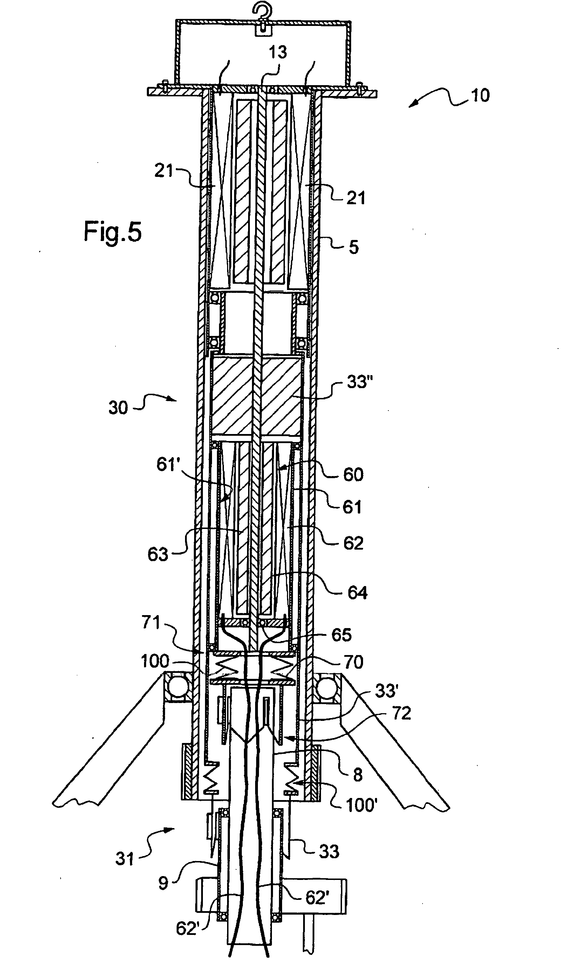

Les figures 4 et 5 présentent un dispositif 10 selon un deuxième mode de réalisation.

Selon ce deuxième mode de réalisation, le mécanisme 30 est muni d'un moyen de liaison 31 comprenant un raccord d'entraînement 33 en prise avec un organe de référence rotatif 9, tel qu'un engrenage d'une boîte de transmission de puissance 6.

L'organe de référence rotatif 9 entraîne alors l'arbre 13 via le raccord d'entraînement 33 du moyen de liaison 31 en rotation selon un premier sens à une première vitesse, le tube supérieur étant mis en rotation par le mât selon un deuxième sens et à une deuxième vitesse. Le premier sens diffère alors du deuxième sens et / ou la première vitesse diffère de la deuxième vitesse.

La variante de la figure 4 présente un dispositif 10 muni d'un unique alternateur et en l'occurrence un alternateur supérieur 20.

En outre, le raccord d'entraînement peut être solidaire de l'arbre 13. Toutefois, le moyen de liaison 31 peut comprendre un organe d'accouplement 100' autorisant un désalignement entre le raccord d'entraînement 33 et l'arbre 13 par exemple

On note que le-dispositif 10 peut comprendre des moyens de guidage de l'arbre 13.

En référence à la figure 5, le mécanisme 30 peut inclure un tube intermédiaire 33' et un pignon 33" solidaire de l'arbre 13. Dès lors, le raccord d'entraînement 33 peut être solidaire du tube intermédiaire 33' engrenant le pignon 33" de l'arbre 13. Le raccord d'entraînement est par exemple fixé au tube intermédiaire 33' directement ou indirectement par un organe d'accouplement 100' du moyen de liaison 31 selon la réalisation présentée.

Il est à noter que cette variante du deuxième mode de réalisation permet d'équiper le dispositif 10 avec un alternateur inférieur 60, destiné par exemple à alimenter en électricité un équipement électrique situé dans la cellule de l'aéronef et donc dans un repère fixe contrairement au repère tournant du rotor.

Cet alternateur inférieur 60 est pourvu d'un tube inférieur 61 immobile lié par un organe de liaison 70 à un élément fixe 8 de l'aéronef.

Cet organe de liaison peut comprendre un moyen d'accouplement 100 permettant un désalignement entre une première portion 71 de l'organe de liaison liée au tube inférieur 61, et une deuxième portion 72 de l'organe de liaison liée à un raccord autobloquant 72 de fixation audit élément fixe 8.

Par ailleurs, l'alternateur inférieur 60 inclut des bobines inférieures 62 fixées contre une surface périphérique interne inférieure 61' du tube inférieur. Ces bobines inférieures 62 sont séparées d'au moins un aimant permanent inférieur 63 de l'arbre 13 par un entrefer inférieur 64.

Les bobines inférieures peuvent alimenter en électricité un équipement de la cellule de l'aéronef par des liaisons 62'.

On note qu'il est possible de prévoir des moyens de guidage entre l'arbre 13 et l'alternateur inférieur 60, tel qu'un moyen de roulement inférieur 65 à billes ou à rouleaux agencé entre le tube inférieur 61 et l'arbre 13.

A l'instar de l'alternateur supérieur 20, l'alternateur inférieur 60 peut comprendre des moyens fusibles pour ne pas bloquer le rotor tournant en cas de défaillances.

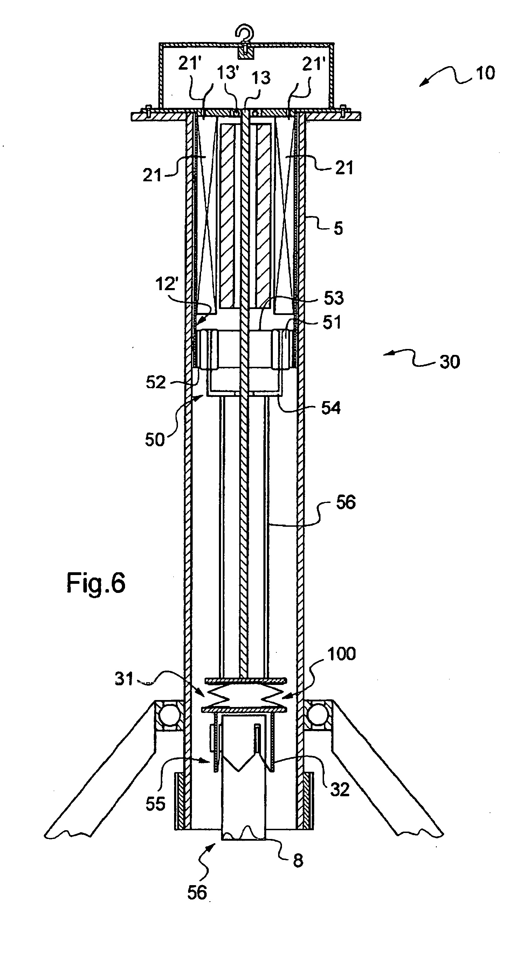

Les figures 6 à 9 présentent un troisième mode de réalisation selon différentes variantes.

Selon ce troisième mode de réalisation, le mécanisme 30 comprend une transmission mécanique pour accélérer ou ralentir l'arbre 13, et par suite les aimants permanents de cet arbre 13.

La transmission mécanique 50 est pourvue d'un engrenage planétaire 53 solidaire de l'arbre 13 et d'une couronne 52 dentée, une pluralité d'engrenages satellites 51 étant interposée entre la couronne 52 dentée et l'engrenage planétaire 53.

Les engrenages satellites sont alors portés par un porte-satellites 54 coopérant avec un organe autobloquant 55 de liaison à un organe d'accueil immobile 8 de l'aéronef.

Conformément à la première variante du troisième mode de réalisation de la figure 6 présentant un dispositif 10 muni d'un unique alternateur et en l'occurrence un alternateur supérieur 20, la couronne 52 est solidaire du tube supérieur 12. Le tube supérieur 12 entraîne alors l'arbre 13 par le biais de la transmission mécanique 50.

En outre, l'organe autobloquant 55 représente un raccord autobloquant 32 du moyen de liaison 31 relié à un organe de référence immobile,

Par exemple, le porte-satellites 54 comprend un tube de soutien 56 solidaire du moyen de liaison 31, ce moyen de liaison 31 comportant un moyen d'accouplement 100 et le raccord autobloquant 55

Par suite selon cette réalisation, le mécanisme 30 inclut successivement une transmission mécanique 50, un tube de soutien 56 puis un moyen de liaison 31 comprenant un moyen d'accouplement 100 et un organe aulobloquant 55.

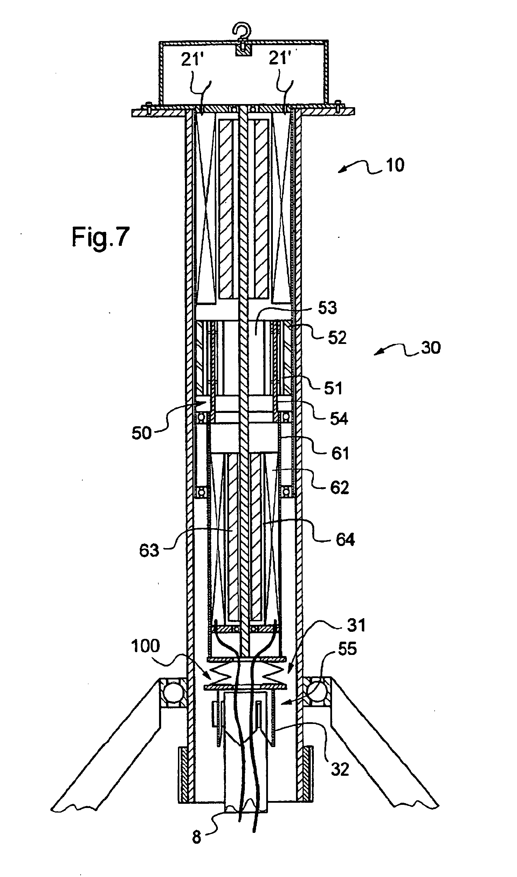

La figure 7 présente une réalisation préférée de l'invention correspondant à la première variante du troisième mode de réalisation appliquée à un dispositif 10 muni d'un alternateur inférieur 60.

Dès lors, le porte-satellites 54 est solidaire du tube inférieur 61 de l'alternateur inférieur 60, ce tube inférieur 61 étant relié à l'organe autobloquant 55 éventuellement par le moyen d'accouplement 100.

Selon cette réalisation, le mécanisme 30 inclut successivement une transmission mécanique 50, un tube inférieur 61 d'un alternateur inférieur puis un moyen de liaison 31 incluant un moyen d'accouplement 100 et un organe autobloquant 55.

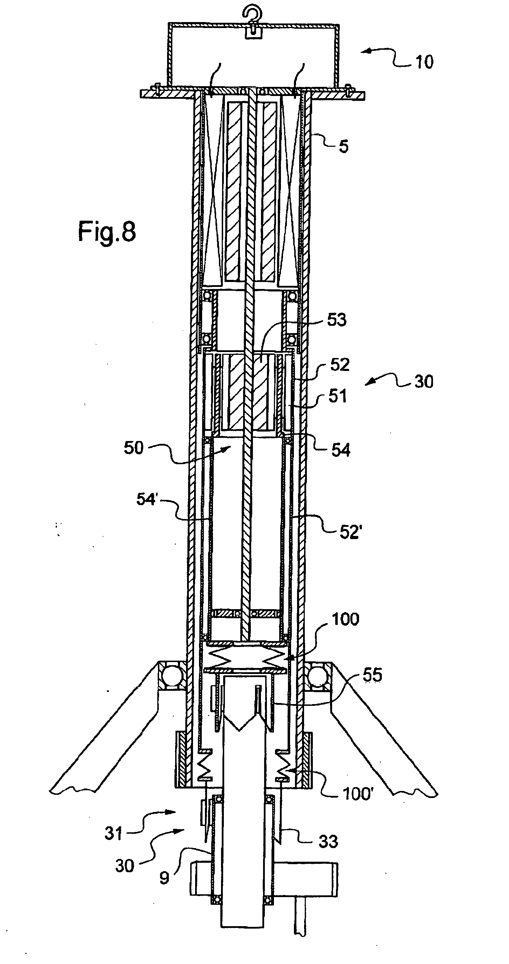

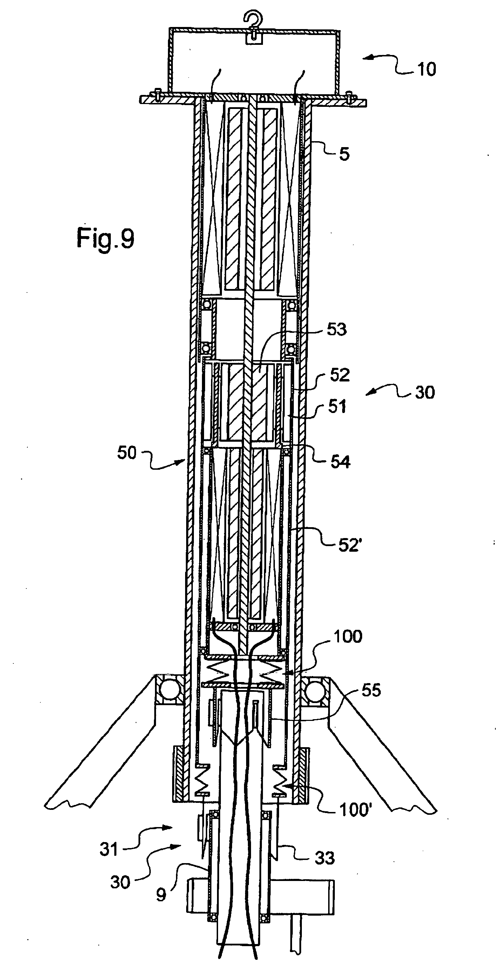

Les figures 8 et 9 présentent une deuxième variante du troisième mode de réalisation.

Selon cette deuxième variante du troisième mode de réalisation, la couronne 52 coopère avec un moyen de liaison 31 pourvu d'un raccord d'entraînement 33 entraîné par un organe de référence rotatif 9 de l'aéronef. Cette couronne 52 peut être engrenée par un pignon d'un tube intermédiaire 52' portant ledit raccord d'entraînement 33, directement ou indirectement par un organe d'accouplement 100'.

Conformément à la deuxième variante du troisième mode de réalisation de la figure 8 présentant un dispositif 10 muni d'un unique alternateur et en l'occurrence un alternateur supérieur 20, le porte-satellites 54 comprend un tube de soutien 54' solidaire d'un moyen d'accouplement 100 autorisant un désalignement, ce moyen d'accouplement étant solidaire de l'organe autobloquant 55.

Par suite selon cette réalisation, le mécanisme 30 inclut.:
- une transmission mécanique 50,
- un tube de soutien 54' d'un porte-satellites 54 de la transmission mécanique 50 coopérant avec un premier moyen de liaison incluant un moyen d'accouplement 100 et un organe autobloquant 55 de fixation à un organe de référence immobile,
- un tube intermédiaire 52' engrenant une couronne 52 de la transmission mécanique 50, le tube intermédiaire 52' coopérant avec un deuxième moyen de liaison 31 muni d'un moyen d'accouplement 100' et d'un raccord d'entraînement 33 apte à être entraîné par un organe de référence rotatif.

La figure 9 présente une réalisation correspondant à la deuxième variante du troisième mode de réalisation appliquée à un dispositif 10 muni d'un alternateur inférieur 60.

Dès lors, le porte-satellites 54 est solidaire du tube inférieur 61 de l'alternateur inférieur 60, ce tube inférieur 61 étant relié à l'organe autobloquant 55 éventuellement par le moyen d'accouplement 100.

Par suite selon cette réalisation, le mécanisme 30 inclut:
- une transmission mécanique 50,
- un tube inférieur 61 solidaire d'un porte-satellites 54 de la transmission mécanique 50, le tube inférieur 61 coopérant avec un premier moyen de liaison incluant un moyen d'accouplement 100 et un organe autobloquant 55 de fixation à un organe de référence immobile,
- un tube intermédiaire 52' engrenant une couronne 52 de la transmission mécanique 50, le tube intermédiaire 52' coopérant avec un deuxième moyen de liaison 31 muni d'un moyen d'accouplement 100' et d'un raccord d'entraînement 33 apte à être entraîné par un organe de référence rotatif.

On note que le mécanisme peut induire des vitesses de rotation relatives importante entre le bobinage supérieur et l'aimant supérieur.

Par exemple, l'aéronef étant un giravion, le mât 5 peut être entraîné à une vitesse comprise approximativement entre 200 et 400 tours par minutes.

En outre, l'organe rotatif 9 peut entraîner la couronne 52 du mécanisme à une vitesse de rotation de l'ordre de 2000 tours par minutes éventuellement. A l'inverse, le porte-satellites 54, et le tube inférieur 61 portant le bobinage inférieur le cas échéant, sont immobiles.

Dès lors, l'arbre 13 peut effectuer un mouvement rotatif à une vitesse de l'ordre de 10000 tours par minutes par exemple.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif (10) d'alimentation électrique d'au moins un équipement d'un rotor tournant (2) entraîné par un mât (5), ledit dispositif (10) comprenant une canne (11) amovible apte à être solidarisée de manière réversible audit mât (5),
**caractérisé en ce que** ladite canne (11) comprend un alternateur supérieur (20) et un tube supérieur (12) apte à être solidarisé en rotation audit mât (5), ledit alternateur supérieur (20) ayant une pluralité de bobines supérieures (21) fixées à une surface périphérique interne supérieure (12') dudit tube supérieur (12), ladite canne (11) ayant un arbre (13) portant au moins un aimant permanent supérieur (22) dudit alternateur supérieur (20) séparé desdites bobines supérieures (21) par un entrefer supérieur (23) prédéterminé, au moins un moyen de roulement supérieur (13') étant interposé entre ledit arbre (13) et ledit tube supérieur (12), ledit dispositif (10) ayant un mécanisme (30) pour que ledit arbre (13) et ledit tube supérieur (12) effectuent des mouvements rotatifs distincts, ledit mécanisme (30) ayant un moyen de liaison (31) pour pouvoir être connecté à un organe de référence (8, 9) d'un aéronef (1).

2. Dispositif selon la revendication 1,
**caractérisé en ce que** ladite canne (11) ayant une collerette (14) saillante de fixation, ledit dispositif (10) comprend une roue (40) en matière souple du groupe des élastomères fixée à ladite collerette (14), ladite roue (40) étant pourvue de crans (41) périphériques aptes à coopérer par interférence de forme avec un organe tournant (5) d'un rotor tournant (2).

3. Dispositif selon l'une quelconque des revendications 1 à 2, **caractérisé en ce que**, ledit rotor tournant (2) ayant une pluralité de zones électriques distinctes, ledit alternateur supérieur (20) comprend une bobine supérieure (21) par zone électrique.

4. Dispositif selon l'une quelconque des revendications 1 à 3,
**caractérisé en ce que** chaque bobine supérieure est redondée.

5. Dispositif selon l'une quelconque des revendications 1 à 4,
**caractérisé en ce que** le couple induit en cas de court-circuit desdites bobines supérieures est égal au couple nominal de fonctionnement de l'alternateur supérieur (20).

6. Dispositif selon l'une quelconque des revendications 1 à 5,
**caractérisé en ce que** ledit mécanisme (30) est muni d'un moyen de liaison (31) comportant un raccord autobloquant (32) à un organe de référence immobile (8).

7. Dispositif selon l'une quelconque des revendications 1 à 5,
**caractérisé en ce que** ledit mécanisme (30) est muni d'un moyen de liaison (31) pourvu d'un raccord d'entraînement (33) apte à être entraîné par un organe de référence rotatif (9).

8. Dispositif selon l'une quelconque des revendications 1 à 5,
**caractérisé en ce que** ledit mécanisme (30) comprend une transmission mécanique (50) munie d'une pluralité d'engrenages satellites (51) en prise d'une part avec une couronne (52) dentée et d'autre part avec un engrenage planétaire (53) dudit arbre (13), lesdits engrenages satellites (51) étant portés par un porte-satellites (54) coopérant avec d'un organe autobloquant (55) de liaison à un organe d'accueil immobile (56).

9. Dispositif selon la revendication 8,
**caractérisé en ce que** ledit organe autobloquant (55) est un raccord autobloquant (32) du moyen de liaison (31).

10. Dispositif selon la revendication 8,
**caractérisé en ce que** ladite couronne (52) est fixée à ladite surface périphérique interne supérieure (12').

11. Dispositif selon la revendication 8
**caractérisé en ce que** ladite couronne (52) est munie d'un moyen de liaison (31) pourvu d'un raccord d'entraînement (33) apte à être entraîné par un organe de référence rotatif (9).

12. Dispositif selon la revendication 1,
**caractérisé en ce qu'**il comporte un alternateur inférieur (60) pourvu d'un tube inférieur (61) muni d'un organe de liaison (70) non rotatif, ledit alternateur inférieur (60) ayant une pluralité de bobines inférieures (62) fixée à une surface périphérique interne inférieure (61') dudit tube inférieur (61), ledit arbre (13) portant au moins un aimant permanent inférieur (63) dudit alternateur inférieur (60) séparé desdites bobines inférieures (62) par un entrefer inférieur (64) prédéterminé, au moins un moyen de roulement inférieur (65) étant interposé entre ledit arbre (13) et ledit tube inférieur (61).

13. Dispositif selon la revendication 12,
**caractérisé en ce que** ledit organe de liaison (70) inclut un moyen d'accouplement (100) permettant un désalignement entre une première portion (71) et une deuxième portion (72) dudit organe de liaison (70).

14. Dispositif selon la revendication 12,
**caractérisé en ce que** ledit tube inférieur (61) comprend un porte-satellites (54) portant une pluralité d'engrenages satellites (51) en prise avec un engrenage planétaire (53) dudit arbre (13) et une couronne (52) dentée.

15. Aéronef (1) muni d'un rotor tournant (2),
**caractérisé en ce qu'**il comporte un dispositif (10) amovible selon l'une quelconque des revendications précédentes.

## Patentansprüche

1. Vorrichtung (10) zur Stromversorgung mindestens einer sich drehenden Rotorausrüstung (2), die von einem Mast (5) angetrieben wird, wobei die Vorrichtung (10) einen abnehmbaren Stift (11) aufweist, der reversibel an dem Mast (5) befestigbar ist,
**dadurch gekennzeichnet, dass** der Stift (11) einen oberen Wechselstromgenerator (20) und ein oberes Rohr (12) aufweist, welches drehfest mit dem Mast (5) verbindbar ist, wobei der obere Wechselstromgenerator (20) eine Mehrzahl von oberen Spulen (21) aufweist, die an einer inneren oberen Randfläche (12') des oberen Rohrs (12) befestigt sind, wobei der Stift (11) eine Welle (13) aufweist, die mindestens einen oberen Permanentmagneten (22) des oberen Wechselstromgenerators (20) aufweist, der von den oberen Spulen (21) durch einen oberen vorbestimmten Luftspalt (23) getrennt ist, wobei mindestens ein oberes Drehlager (13') zwischen der Welle (13) und dem oberen Rohr (12) angeordnet ist, wobei die Vorrichtung (10) einen Mechanismus (30) aufweist, der bewerkstelligt, dass die obere Welle (13) und das obere Rohr (12) unterschiedliche Drehbewegungen ausführen, wobei der Mechanismus (30) ein Verbindungsmittel (31) aufweist, um mit einem Bezugsorgan (8, 9) eines Luftfahrzeugs (1) verbunden werden zu können.

2. Vorrichtung nach Anspruch 1,
**dadurch gekennzeichnet, dass** der Stift (11) einen vorstehenden Befestigungskragen (14) aufweist, wobei die Vorrichtung (10) ein Rad (40) aus einem weichen Material aus der Gruppe der Elastomere aufweist, welches an dem Kragen (14) befestigt ist, wobei das Rad (40) mit Randzacken (41) versehen ist, die durch Formschluss mit einem sich drehenden Element (5) eines sich drehenden Rotors (2) zusammenwirken können.

3. Vorrichtung nach einem der Ansprüche 1 bis 2,
**dadurch gekennzeichnet, dass** der sich drehende Rotor (2) eine Mehrzahl von verschiedenen elektrischen Bereichen aufweist, wobei der obere Wechselstromgenerator (20) eine obere Spule (21) pro elektrischem Bereich aufweist.

4. Vorrichtung nach einem der Ansprüche 1 bis 3,
**dadurch gekennzeichnet, dass** jede obere Spule redundant ausgelegt ist.

5. Vorrichtung nach einem der Ansprüche 1 bis 4,
**dadurch gekennzeichnet, dass** das im Falle eines Kurzschlusses der oberen Spulen induzierte Drehmoment gleich dem nominalen Betriebsdrehmoment des oberen Wechselstromgenerators (20) ist.

6. Vorrichtung nach einem der Ansprüche 1 bis 5,
**dadurch gekennzeichnet, dass** der Mechanismus (30) mit einem Verbindungsmittel (31) versehen ist, das eine selbstblockierende Verbindung (32) mit einem unbeweglichen Referenzorgan (8) aufweist.

7. Vorrichtung nach einem der Ansprüche 1 bis 5,
**dadurch gekennzeichnet, dass** der Mechanismus (30) mit einem Verbindungsmittel (31) versehen ist, mit einer Antriebsverbindung (33), die durch ein sich drehendes Referenzorgan (9) angetrieben werden kann.

8. Vorrichtung nach einem der Ansprüche 1 bis 5,
**dadurch gekennzeichnet, dass** der Mechanismus (30) ein mechanisches Getriebe (50) aufweist, mit einer Mehrzahl von Satellitenzahnrädern (51), die einerseits in Eingriff stehen mit einem Zahnkranz (52) und andererseits mit einem Planetengetriebe (53) der Welle (13), wobei die Satellitenzahnräder (51) von einem Satellitenträger (54) getragen werden, der mit einem selbstblockierenden Verbindungsorgan (55) zur Verbindung mit einem unbeweglichen Aufnahmeorgan (56) zusammenwirkt.

9. Vorrichtung nach Anspruch 8,
**dadurch gekennzeichnet, dass** das selbstblockierende Organ (55) eine selbstblockierende Verbindung (32) des Verbindungsmittels (31) ist.

10. Vorrichtung nach Anspruch 8,
**dadurch gekennzeichnet, dass** der Kranz (52) an der inneren oberen Randfläche (12') befestigt ist.

11. Vorrichtung nach Anspruch 8,
**dadurch gekennzeichnet, dass** der Kranz (52) mit einem Verbindungsmittel (31) mit einer Antriebsverbindung (33) versehen ist, die durch ein sich drehendes Bezugsorgan (9) angetrieben werden kann.

12. Vorrichtung nach Anspruch 1,
**dadurch gekennzeichnet, dass** sie einen unteren Wechselstromgenerator (60) aufweist, mit einem unteren Rohr (61), welches mit einem nicht drehbaren Verbindungsorgan (70) versehen ist, wobei der untere Wechselstromgenerator (60) eine Mehrzahl von unteren Spulen (62) aufweist, die an einer unteren Innenrandfläche (61') des unteren Rohrs (61) befestigt sind, wobei die Welle (13) mindestens einen unteren Permanentmagneten (63) des unteren Wechselstromgenerators (60) trägt, der von den unteren Spulen (62) durch einen unteren vorbestimmten Luftspalt (64) getrennt ist, wobei mindestens ein unteres Drehlager (65) zwischen der Welle (13) und dem unteren Rohr (61) angeordnet ist.

13. Vorrichtung nach Anspruch 12,
**dadurch gekennzeichnet, dass** das Verbindungsorgan (70) ein Kupplungsmittel (100) umfasst, das einen Versatz zwischen einem ersten Bereich (71) und einem zweiten Bereich (72) des Verbindungsorgans (70) ermöglicht.

14. Vorrichtung nach Anspruch 12,
**dadurch gekennzeichnet, dass** das untere Rohr (61) einen Satellitenträger (54) aufweist, der eine Mehrzahl von Satellitenzahnrädern (51) trägt, die in Eingriff mit einem Planetengetriebe (53) der Welle (13) und mit einem Zahnkranz (52) stehen.

15. Luftfahrzeug (1) mit einem sich drehenden Rotor (2),
**dadurch gekennzeichnet, dass** es eine lösbare Vorrichtung (10) nach einem der vorstehenden Ansprüche aufweist.

## Claims

1. Device (10) for supplying electric power to at least one item of equipment of a rotor (2) driven by a mast (5), said device (10) comprising a removable rod (11) suitable for being secured reversibly to said mast (5),
**characterised in that** said rod (11) comprises an upper alternator (20) and an upper tube suitable (12) suitable for being secured rotationally to said mast (5), said upper alternator (20) having a plurality of upper coils (21) fastened to an upper inside peripheral surface (12') of said upper tube (12), said rod (11) having a shaft (13) carrying at least one upper permanent magnet (22) of said upper alternator (20) separated from said upper coils (21) by a predetermined upper air gap (23), at least one upper rolling bearing means (13') being interposed between said shaft (13) and said upper tube (12), said device (10) having a mechanism (30) so that said shaft (13) and said upper tube (12) move with distinct rotary movements, said mechanism (30) having a connection means (31) so as to be connectable to a reference member (8, 9) of an aircraft (1).

2. Device according to Claim 1,
**characterised in that**, with said rod (11) having a projecting fastening flange (14), said device (10) comprises a wheel (40) made of a flexible material from the group of the elastomers, and fastened to said flange (14), said wheel (40) being provided with peripheral dogs (41) suitable for co-operating by shape interference with a rotary member (5) of a rotor (2).

3. Device according to any one of Claims 1 to 2, **characterised in that**, with said rotor (2) having a plurality of distinct electrical zones, said upper alternator (20) comprises one upper coil (21) per electrical zone.

4. Device according to any one of Claims 1 to 3,
**characterised in that** each upper coil is redundant.

5. Device according to any one of Claims 1 to 4,
**characterised in that** the torque induced in the event of said upper coils short-circuiting is equal to the nominal operating torque of the upper alternator (20).

6. Device according to any one of Claims 1 to 5, **characterised in that** said mechanism (30) is provided with a connection means (31) comprising a self-locking coupling (32) for coupling to a fixed reference member (8).

7. Device according to any one of Claims 1 to 5,
**characterised in that** said mechanism (30) is provided with a connection means (31) provided with a drive coupling (33) suitable for being driven by a rotary reference member (9).

8. Device according to any one of Claims 1 to 5,
**characterised in that** said mechanism comprises a mechanical transmission (50) provided with a plurality of planet gears (51) in engagement on the one hand with a toothed ring (52) and on the other hand with a sun gear (53) of said shaft (13), said planet gears (51) being carried by a planet carrier (54) co-operating with a self-locking member (55) for connecting to a fixed receiving member (56).

9. Device according to Claim 8,
**characterised in that** said self-locking member (55) is a self-locking coupling (32) of the connection means (31).

10. Device according to Claim 8,
**characterised in that** said ring (52) is fastened to said upper inside peripheral surface (12').

11. Device according to Claim 8,
**characterised in that** said ring (52) is provided with a connection means (31) provided with a drive coupling (33) suitable for being driven by a rotary reference member (9).

12. Device according to Claim 1,
**characterised in that** it comprises a lower alternator (60) provided with a lower tube (61) provided with a non-rotary connection member (70), said lower alternator (60) having a plurality of lower coils (62) fastened to a lower inside peripheral surface (61') of said lower tube (61), said shaft (13) carrying at least one lower permanent magnet (63) of said bottom alternator (60) separated from said lower coils (62) by a predetermined lower air gap (64), at least one bottom rolling bearing means (65) being interposed between said shaft (13) and said lower tube (61).

13. Device according to Claim 12,
**characterised in that** said connection member (70) includes a coupling means (100) making it possible for a first portion (71) and a second portion (72) of said connection member (70) to be out of alignment with each other.

14. Device according to Claim 12,
**characterised in that** said lower tube (61) comprises a planet carrier (54) carrying a plurality of planet gears (51) in engagement with a sun gear (53) of said shaft (13) and a toothed ring (52).

15. Aircraft (1) provided with a rotor (2),
**characterised in that** it comprises a removable device (10) according to any one of the preceding claims.
